# EUROPEAN PATENT APPLICATION

(11) **EP 2 752 526 A2**
(43) Date of publication of application: **09.07.2014**
(21) Application number: 13398016.9
(22) Date of filing: 13.12.2013
(51) Int. Cl.: E03D 11/14, F16B 37/08

(54) **Device for wall-mounting a sanitary fixture installation structure**

(30) Priority: 13.12.2012 IT MI20122128
(71) Applicant: Oliveira & Irmao S.A., 3800 Aveiro (PT)
(72) Inventor: Lopes Dias de Figueiredo, Noé, 3800-716 Aveiro (PT)
(74) Representative: Cernuzzi, Daniele

(57) **Abstract**

A device (10) for wall-mounting a sanitary fixture installation structure (1) has a wall fastener (11); a locator (12) insertable inside the structure (1); a locking member (13) slidable inside the fastener (11) and having a nut screw portion (56); and an externally threaded connecting rod (14) which extends along an assembly axis (A) and connects the locator (12) to the locking member (13); the locking member (13) has an inner manoeuvring seat (60), which is open along the assembly axis (A) to allow the rod (14) to slide, and is closed at opposite ends, along a transverse axis (B) perpendicular to the assembly axis (A), to only allow the locking member (13) a predetermined amount of travel along the transverse axis (B).

## Description

The present invention relates to a device for wall-mounting a sanitary fixture installation structure.

Sanitary fixtures are known to be installed using recessed, walled-in installation structures, which substantially comprise a metal frame fitted with supports for the sanitary fixture (e.g. a lavatory, sink, etc.), and possibly with auxiliary component parts (e.g. pipes, a flush tank, etc.). To effectively and safely support the sanitary fixture, installation structures of this sort must be fixed to a supporting wall.

Numerous systems are known for wall-mounting the installation structure, but are not without drawbacks: they are relatively complicated and expensive to produce, or involve relatively difficult, time-consuming installation work or the use of tools, especially for adjusting the distance between the installation structure and the wall. Known systems are therefore unsatisfactory in terms of both cost and easy manufacture, and fast, easy assembly.

It is therefore an object of the present invention to provide a device for wall-mounting a sanitary fixture installation structure, designed to eliminate the drawbacks of the known art; more specifically, it is an object of the invention to provide a device that is extremely cheap and easy both to produce and install, and which also permits fast, easy adjustment of the distance between the installation structure and the wall.

According to the present invention, there is provided a device for wall-mounting a sanitary fixture installation structure, substantially as defined in the attached Claim 1, and in the dependent Claims as regards its preferred features.

The device according to the present invention is extremely cheap and easy both to produce and install, and also permits fast, easy adjustment of the distance between the installation structure and the wall.

A non-limiting embodiment of the present invention will be described by way of example with reference to the attached drawings, in which :
Figure 1 shows a schematic view in perspective of a sanitary fixture installation structure equipped with a wall-mounting device in accordance with the present invention;
Figure 2 shows a larger-scale view in perspective of a detail, and specifically of the wall-mounting device, of the Figure 1 installation structure;
Figure 3 shows an exploded view in perspective of the Figure 2 wall-mounting device;
Figure 4 shows a longitudinal section of the Figure 2 wall-mounting device;
Figures 5 and 6 show two views in perspective of the wall-mounting device according to the present invention in respective operating positions.

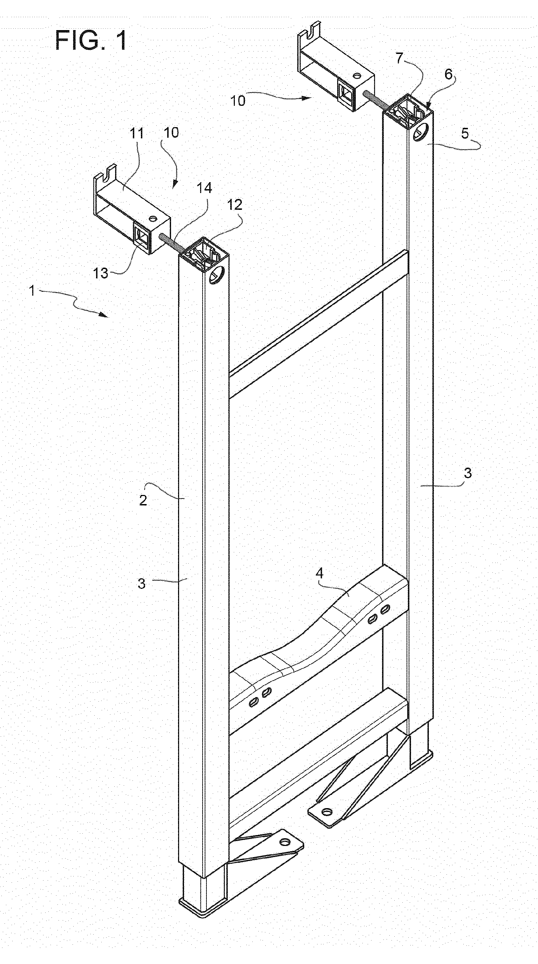

Number 1 in Figure 1 indicates a sanitary fixture installation structure.

Structure 1 comprises a metal frame 2 having two parallel vertical posts 3 (preferably telescopic, with respective extendable legs), and one or more cross members 4 between posts 3. Posts 3 are hollow, e.g. defined by respective metal sections. More specifically, each post 3 has a top end portion 5, positioned at a top end of the post 3 and having an inner cavity 6 accessible through a top opening 7.

Structure 1 has a wall-mounting device 10 by which to fix structure 1 to a wall. As shown in Figure 1, structure 1 has two devices 10 associated with respective posts, 3, and of which only one is described in detail below.

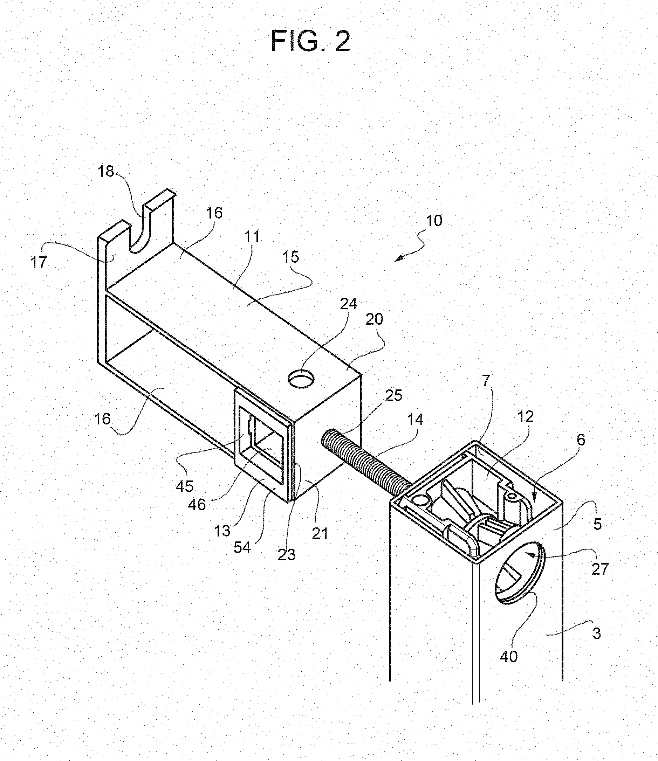

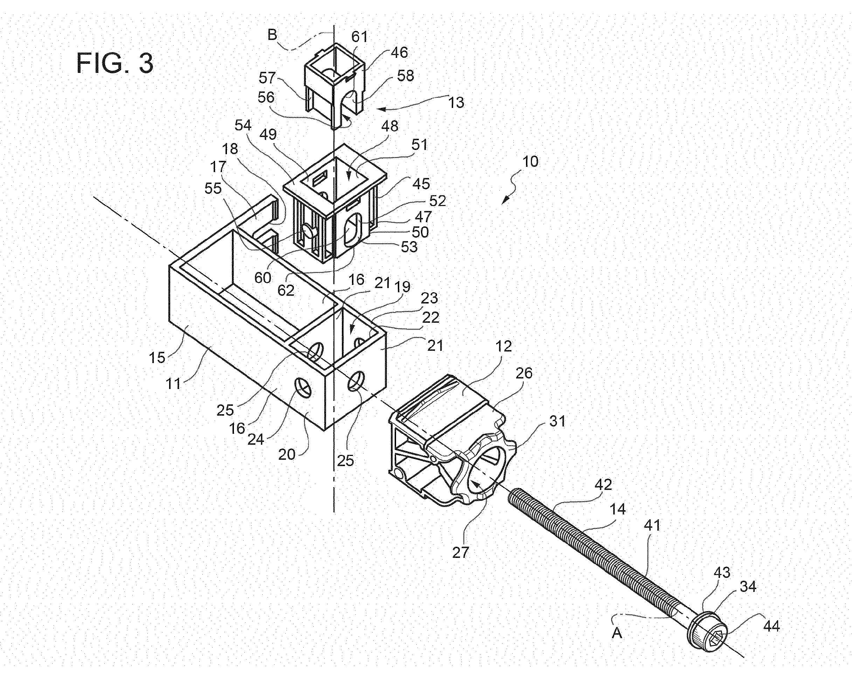

With reference to Figures 2 to 4, device 10 comprises a wall fastener 11; a locator 12 insertable inside cavity 6 of structure 1; a locking member 13 fitted to fastener 11; and a connecting rod 14 extending along an assembly axis A and connecting locator 12 to locking member 13.

Fastener 11 comprises a bracket body 15 having two sides 16 parallel to each other and to axis A, and a plate 17 substantially perpendicular to sides 16 and to axis A and having at least one hole or slot 18 for a wall anchor.

In a preferred embodiment, though not necessarily, body 15 is made of metal, in particular aluminium.

Fastener 11 has a slide seat 19 located at the opposite end of body 15 to plate 17, and which houses locking member 13, which slides inside seat 19 along a transverse axis B perpendicular to axis A. Seat 19 is a polygonal seat bounded by two pairs of opposite lateral walls 20, 21 for guiding and laterally retaining locking member 13 inside seat 19, and has two open opposite ends with respective openings 22 aligned along axis B and through which locking member 13 is insertable inside seat 19. Openings 22 are bounded by respective peripheral edges 23.

More specifically, walls 20 are defined by respective end portions of sides 16; and walls 21 are two facing walls parallel to each other and to plate 17 and substantially perpendicular to sides 16 and axis A.

Walls 20 have respective lock seats 24 aligned perpendicularly to axes A and B.

Walls 21 have respective through holes 25 aligned along axis A and through which to insert rod 14.

Locator 12 comprises a block 26 preferably made of plastic (e.g. polypropylene) and having a through inner cavity 27 in which rod 14 slides along axis A. Cavity 27 has an inlet 31, through which rod 14 is insertable; and an outlet 32 opposite inlet 31 and aligned with inlet 31 along axis A.

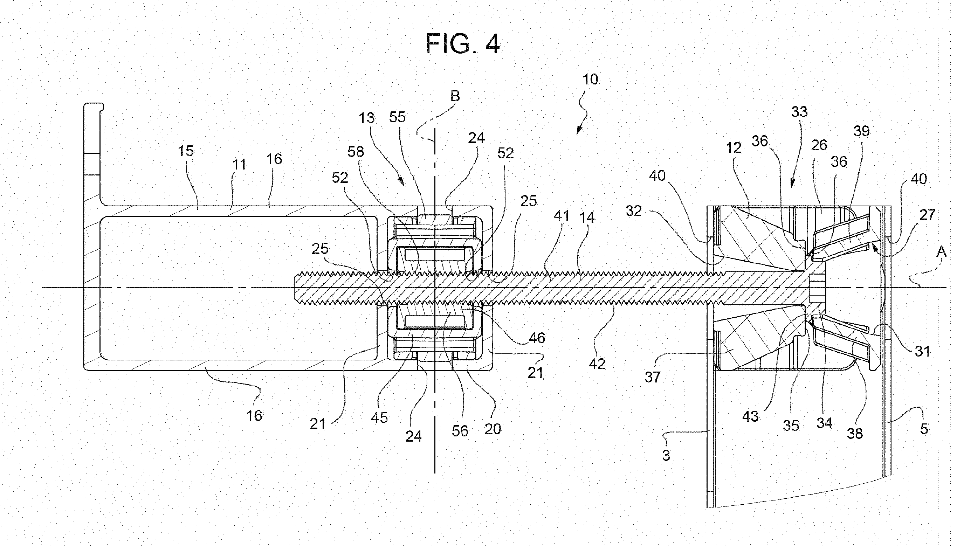

Locator 12 has an axial locking device 33 for locking rod 14, and more specifically a head 34 of rod 14, axially inside cavity 27, to connect rod 14 axially integral with locator 12. In the example shown (Figure 4), axial locking device 33 comprises a coupling seat 35, which is defined by a circumferential groove formed in cavity 27, about axis A, and having two opposite axial shoulders 36 perpendicular to axis A.

Coupling seat 35 is defined, for example, by two opposite, facing structures 37, 38, which project inside cavity 27 from axially opposite ends of block 26. Structure 38, facing inlet 31, is defined by elastic members 39 deformable radially to allow head 34 to click inside coupling seat 35, and which, for example, converge towards coupling seat 35.

Locator 12 is insertable through opening 7 into cavity 6 of a post 3 in a direction perpendicular to axis A; and portion 5 of post 3 has two holes 40 formed through two opposite lateral walls of post 3 and aligned along axis A. When locator 12 is housed inside cavity 6, inlet 31, outlet 32, and holes 40 are substantially aligned along axis A.

Rod 14 comprises head 34; and a stem 41, e.g. substantially cylindrical, extending along axis A from head 34 and having an external thread 42. Head 34 has a radially outer collar 43 larger in diameter than stem 41, and which, by elastically deforming elastic members 39, clicks inside coupling seat 35 to engage coupling seat 35 and rest against shoulders 36.

Head 34 is manoeuvrable using a tool, e.g. inserted inside a hexagonal socket 44 in head 34.

Locking member 13 is insertable inside seat 19 along axis B, to lock rod 14 along axis A inside seat 19.

Locking member 13 comprises an outer member 45 and an inner member 46 fitted to each other.

In a preferred embodiment, though not necessarily, member 45 is made of plastic, e.g. polypropylene, and member 46 is made of metal, e.g. a zinc alloy such as zamak.

Member 45 has a hollow, cup-shaped body 47 designed to fit inside seat 19, and having an inner seat 48 for housing member 46.

Seat 48 is bounded by lateral walls 49 about axis B, and by a bottom wall 50 perpendicular to axis B, and has an opening 51 opposite bottom wall 50 and through which to insert member 46.

Member 45 has two slots 52 formed through respective opposite lateral walls 49 of body 47 and aligned along axis A. Slots 52 are elongated in a direction perpendicular to axis A and parallel to axis B, and are bounded by respective continuous peripheral edges 53.

Member 45 has an outer flange 54 defined, for example, by end edges projecting outwards from respective lateral walls 49. Flange 54 rests on the edge 23 bounding one of openings 22, to arrest slide of locking member 13 inside seat 19.

Member 45 has two teeth 55, which project laterally from two opposite lateral walls 49, and releasably engage lock seats 24 to lock member 45 (and therefore locking member 13) inside seat 19.

Member 46 is designed to lock, e.g. by being force-fitted or clicked, inside seat 48 of member 45.

Member 46 comprises a substantially C-shaped nut screw portion 56 (i.e. having an open, substantially C-shaped cross section); and legs 57, which project from nut screw portion 56 and rest on bottom wall 50. Nut screw portion 56 is threaded internally, and has a curved, substantially semicylindrical, threaded inner lateral surface 58.

Locking member 13, formed by members 45 and 46, has an inner manoeuvring seat 60, which extends along both axis A, to receive rod 14, and axis B, to allow locking member 13 to translate along axis B with respect to rod 14.

Manoeuvring seat 60 is open along axis A to allow rod 14 to slide inside it, but is closed at opposite ends along axis B to establish a predetermined maximum travel of locking member 13, with respect to rod 14, along axis B.

More specifically, manoeuvring seat 60 extends along axis A between the two slots 52, and along axis B between two opposite ends 61, 62 defined by respective opposite, facing portions of members 45, 46. More specifically, the top end 61 is defined by nut screw portion 56 of member 46, and the bottom end 62 is defined by respective bottom portions of edges 53 of slots 52.

When locking member 13 is assembled, i.e. when member 46 is housed inside seat 48 and rests on bottom wall 50, nut screw portion 56 is aligned with respective top portions, opposite bottom wall 50, of edges 53 of slots 52. In other words, surface 58 is substantially aligned with the top of slots 52.

Nut screw portion 56 is designed to fit around stem 41 of rod 14 and engage its thread 42.

Locking member 13 is insertable laterally inside seat 19 through one of openings 22, so that slots 52 are substantially aligned with holes 25 along axis A.

Locking member 13 is slidable inside seat 19 along axis B, i.e. in a direction perpendicular to axis A, until flange 54 comes to rest on edge 23, and teeth 55 engage lock seats 24.

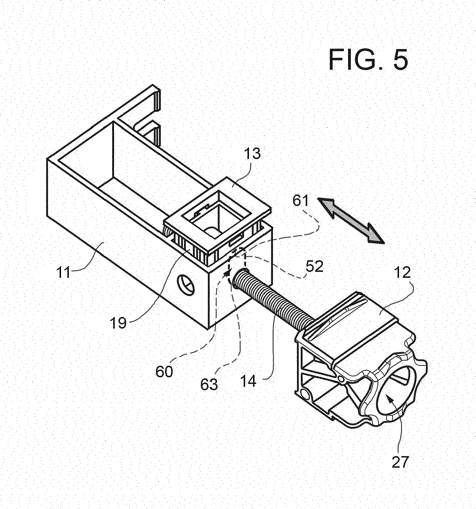

In actual use, and with reference also to Figures 4 and 5, locator 12 is inserted into portion 5 of post 3 through opening 7, and rod 14 is inserted through holes 40 into cavity 27, so head 34 engages coupling seat 35.

Locking member 13, formed by assembling members 45 and 46, is inserted partly, but not locked, inside seat 19 (i.e. without teeth 55 engaging lock seats 24), and slots 52 are aligned with holes 25; rod 14 is then inserted through holes 25 and slots 52. Slots 52 have a length, parallel to axis B, greater than holes 25 and greater than the diameter of rod 14, so locking member 13, engaged by rod 14, can still slide along axis B inside seat 19 by a predetermined amount defined by the length of slots 52.

More specifically, locking member 13 slides between two operating positions:
- a free position, in which rod 14 contacts bottom end 62 of manoeuvring seat 60, and more specifically the bottom portions of edges 53 bounding slots 52; in this position, rod 14 does not engage nut screw portion 56 (i.e. threaded surface 58 does not engage thread 42 of rod 14), and slides freely along axis A with respect to locking member 13, inside manoeuvring seat 60 and through slots 52; and locking member 13 is not locked inside seat 19, by virtue of teeth 55 not engaging lock seats 24;
- an engaged position, in which rod 14 contacts top end 61 of manoeuvring seat 60, and more specifically nut screw portion 56; in this position, rod 14 engages nut screw portion 56 (i.e. thread 42 of rod 14 engages threaded surface 58 of nut screw portion 56), does not slide freely along axis A with respect to locking member 13, but may be screwed inside nut screw portion 56; and locking member 13 is locked inside seat 19 by teeth 55 engaging lock seats 24.

Locking member 13 moves from the free to the engaged position by translating along axis B inside seat 19, and can only translate along axis B with respect to rod 14 by a determined amount defined by slots 52.

When locking member 13 is in the free position, rod 14 can slide freely along axis A (Figure 5) to make a first rough adjustment to the distance between structure 1 and the wall to which fastener 11 is fixed.

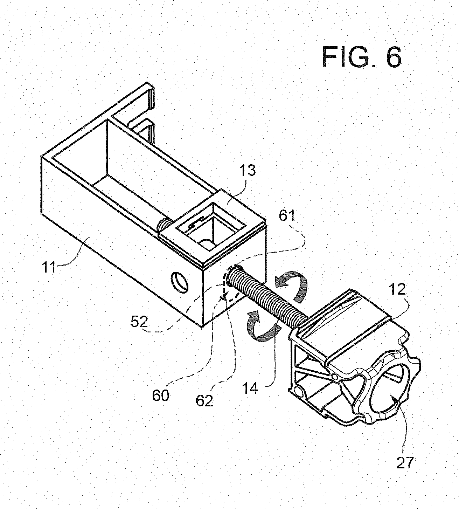

To make an accurate adjustment (Figure 6), locking member 13 is moved into the engaged position.

Clearly, changes may be made to the device as described and illustrated herein without, however, departing from the scope of the accompanying Claims.

## Claims

1. A device (10) for wall-mounting a sanitary fixture installation structure (1), comprising a wall fastener (11) having a slide seat (19); a locator (12) insertable inside a portion (5) of the structure (1); a locking member (13) slidable inside the slide seat (19) along a transverse axis (B) and having an internally threaded, substantially C-shaped nut screw portion (56); and an externally threaded connecting rod (14) which connects the locator (12) to the locking member (13) and extends along an assembly axis (A) perpendicular to the transverse axis (B); the locking member (13) having an inner manoeuvring seat (60), which extends both along the assembly axis (A), and along the transverse axis (B); the device being **characterized in that** the manoeuvring seat (60) is open along the assembly axis (A) to receive the rod (14) and to allow the rod (14) to slide in the manoeuvring seat (60); and is closed at opposite ends along the transverse axis (B) to only allow the locking member (13) a predetermined amount of travel along the transverse axis (B) with respect to the rod (14), and to limit movement of the locking member (13), along the transverse axis (B) and with respect to the rod (14), to said predetermined amount of travel.

2. A device as claimed in Claim 1, wherein the manoeuvring seat (60) extends along the assembly axis (A) between two slots (52) formed in respective opposite lateral walls (49) of the locking member (13), and along the transverse axis (B) between a top end (61), defined by the nut screw portion (56), and a bottom end (62), defined by bottom portions of respective peripheral edges (53) of the slots (52).

3. A device as claimed in Claim 2, wherein the slots (52) are bounded by respective continuous peripheral edges (53).

4. A device as claimed in Claim 2 or 3, wherein the rod (14) is inserted through the slots (52) and through two holes (25), aligned along the assembly axis (A) and formed through respective walls (21) of the fastener (11); the slots (52) having a length, parallel to the transverse axis (B), greater than the holes (25) and the diameter of the rod (14), so the locking member (13), engaged by the rod (14), can still slide, along the transverse axis (B) in the slide seat (19), by a predetermined amount defined by the length of the slots (52).

5. A device as claimed in one of Claims 2 to 4, wherein the locking member (13) is movable between: a free position, in which the rod (14) contacts the bottom end (62) of the manoeuvring seat (60), does not engage the nut screw portion (56), and slides freely along the assembly axis (A) with respect to the locking member (13), inside the manoeuvring seat (60) and through the slots (52); and an engaged position, in which the rod (14) contacts the top end (61) of the manoeuvring seat (60) and engages the nut screw portion (56).

6. A device as claimed in Claim 5, wherein the locking member (13) passes from the free position to the engaged position by translating along the transverse axis (B) in the slide seat (19).

7. A device as claimed in one of Claims 2 to 6, wherein the locking member (13) is composed of an outer member (45) and an inner member (46) connected to each other; and the top and bottom ends (61, 62) are defined by respective opposite, facing portions of the inner and outer members (46, 45).

8. A device as claimed in Claim 7, wherein the outer member (45) is made of plastic, for example, polypropylene, and the inner member (46) is made of metal, for example, a zinc alloy such as zamak.

9. A device as claimed in one of the foregoing Claims, wherein the locking member (13) has teeth (55) which releasably engage respective lock seats (24) formed on the fastener (11) to lock the locking member (13) inside the slide seat (19).

10. A device as claimed in one of the foregoing Claims, wherein the locator (12) has an axial locking device (33) for axially locking a head (34) of the rod (14) between two opposite axial shoulders (36) perpendicular to the assembly axis (A).

11. A device as claimed in Claim 10, wherein the axial locking device (33) comprises a coupling seat (35), defined by a circumferential groove which is formed inside the locator (12) about the assembly axis (A) and is bounded by said opposite axial shoulders (36) and engages a radially outer collar (43) of the head (34).

12. A device as claimed in Claim 11, wherein the coupling seat (35) is defined between two opposite, facing structures (37, 38) projecting from axially opposite ends of the locator (12); at least one of said structures (38) comprising elastic members (39) deformable radially to allow the head (34) to click inside the coupling seat (35).
